# EUROPÄISCHE PATENTSCHRIFT

(11) **EP 3 494 782 B1**
(45) Veröffentlichungstag und Bekanntmachung des Hinweises auf die Patenterteilung: **23.09.2020**
(21) Anmeldenummer: 18202509.8
(22) Anmeldetag: 25.10.2018
(51) Int. Cl.: A01K 19/00

(54) **NASENRING FÜR TIERE**
NOSE RING FOR ANIMALS
ANNEAU NASAL POUR ANIMAUX

(30) Priorität: 06.12.2017 DE 102017222093
(43) Veröffentlichungstag der Anmeldung: 12.06.2019
(73) Patentinhaber: Spritzguß Müller GmbH, 84428 Buchbach-Steeg (DE); Bayern-Genetik GmbH, 84036 Kumhausen (DE)
(72) Erfinder: Müller, Josef, 84428 Buchbach (DE); Beunk, Stef, 7156 MC Beltrum (NL)
(74) Vertreter: Weickmann & Weickmann PartmbB

(56) Entgegenhaltungen:
- DE-A1- 3 907 268
- DE-U1-202010 006 151
- US-A- 1 472 883

## Beschreibung

### I. Anwendungsgebiet

Die vorliegende Erfindung betrifft einen Nasenring für Tiere, der als sogenannter Saugentwöhner beispielsweise für Kälber dient. Derartige Saugentwöhner werden eingesetzt, um im weitesten Sinne zu verhindern, dass beliebige Milch saugende Tiere an den Eutern beliebiger Milch gebender Tiere Milch saugen. Das Saugen kann zu Infektionen oder Verletzungen an dem Euter führen und hat außerdem naturgemäß Milchverluste zur Folge. Bei den Milch saugenden Tieren kann es sich beispielsweise um Kälber, jedoch auch um erwachsene Kühe handeln, die bei anderen erwachsenen Kühen Milch saugen.

### II. Technischer Hintergrund

Saugentwöhner in Form von Nasenringen für Kälber sind beispielsweise aus der DE 39 07 268 A1 und DE 20 2010 006 151 U1 bekannt. Ein Nasenring dieser Art weist einen Spalt zur Aufnahme der Nasenscheidewand eines Kalbes auf. Mit Hilfe dieses Spaltes wird er an der Nase des Kalbes angebracht.

Der bekannte Nasenring weist dornenartige Stacheln auf, die in der von dem Spalt abgewandten Hälfte des Ringkörpers von diesem wegstehen. Versucht ein Kalb, an dem Euter einer erwachsenen Kuh Milch zu saugen, so drückt es den in der Regel nach unten hängenden Nasenring nach oben, so dass die Stacheln in das Euter stechen. Dies hat zur Folge, dass die erwachsene Kuh erschrickt und sich entsprechend schreckartig von dem Kalb entfernt. Das Kalb wird auf diese Weise von dem Saugen von Milch aus dem Euter der Kuh entwöhnt.

Der im Stand der Technik bekannte Nasenring bringt verschiedene Nachteile mit sich. Zum einen besteht die Gefahr, dass das Euter der erwachsenen Kuh durch die Stacheln verletzt wird und die Wunden gegebenenfalls zu Infektionen führen können. Zum anderen treten die erwachsenen Kühe nach dem Stechen der dornartigen Stacheln in ihr Euter manchmal schreckhaft aus und können dadurch das Kalb ernsthaft verletzen.

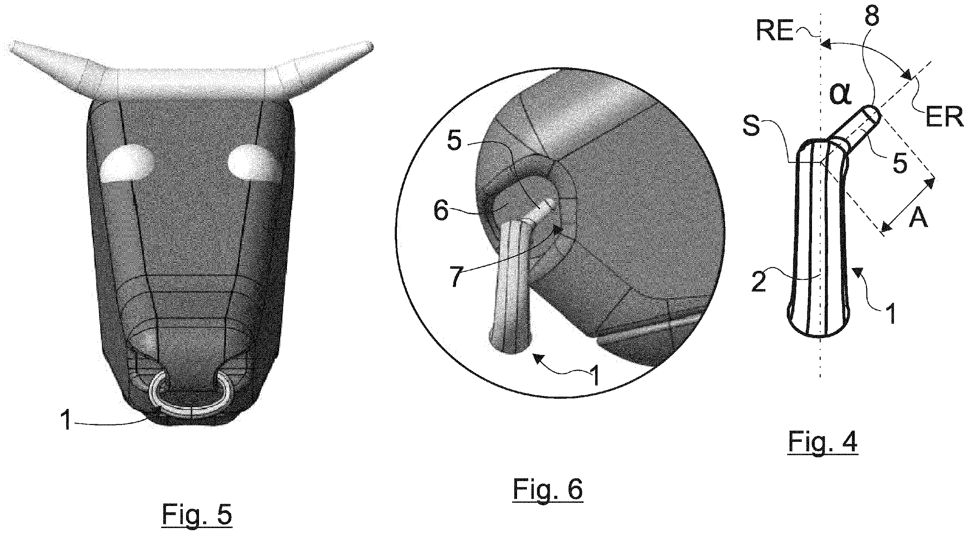

Im Übrigen ist aus der US 1,472,883 A ein Rinderführungsring bekannt, der einen Spalt zum Aufnehmen einer Nasenscheidewand eines Rindes aufweist. Dieser Spalt wird insbesondere bei dem dortigen Ausführungsbeispiel gemäß Fig. 5 von jeweils einem Knopf 11 begrenzt. Die beiden Knöpfe 11 des bekannten Rinderführungsrings sind derart bemessen, dass ein problemloses Führen des Rindes möglich ist. Sie stoßen dementsprechend nicht an eine Nasenwand des Naseninnenraums der Rindernase an. Ein Verhindern des Saugens eines Kalbes an dem Euter einer Kuh wird in der US 1,472,883 A nicht angesprochen.

### I. Darstellung der Erfindung

### a) Technische Aufgabe

Es ist daher die Aufgabe der vorliegenden Erfindung, einen als Saugentwöhner dienenden Nasenring für Tiere, insbesondere Kälber, zu schaffen, der das Kalb von seinem auf beliebige Kühe gerichteten Saugdrang entwöhnt und dabei gewährleistet, dass die erwachsene Kuh weder Schmerzen erfährt noch verletzt wird und das Kalb keiner Verletzungsgefahr durch das Austreten der erwachsenen Kuh ausgesetzt ist.

### b) Lösung der Aufgabe

Diese Aufgabe wird mit einem Nasenring mit den Merkmalen des Anspruchs 1 sowie durch eine Verwendung gemäß der Merkmale des Anspruchs 11 gelöst. Weitere Ausgestaltungen der vorliegenden Erfindung ergeben sich aus den Unteransprüchen.

Erfindungsgemäß wird ein Nasenring für Tiere, beispielsweise Kälber, vorgeschlagen, der einen Ringkörper und einen den Ringkörper unterbrechenden Spalt zur Aufnahme einer Nasenscheidewand des Tieres aufweist. Die Anwendung des Nasenrings ist nicht auf Kälber oder Kühe beschränkt, sondern er kann auch in Zusammenhang mit der Saugentwöhnung anderer Tiere angewendet werden. In dem Bereich des Spaltes weist der Ringkörper einen Naseninnenabschnitt auf, der in einem Naseninnenraum einer Tiernase zu liegen kommt, wenn der Nasenring an der Tiernase angebracht ist.

In seinem Naseninnenabschnitt weist der Ringkörper wenigstens einen Schwenksperrvorsprung auf, der von dem Ringkörper absteht bzw. wegragt und eine Schwenksperrstellung des an der Tiernase befindlichen Nasenrings definiert.

Die Schwenksperrstellung ist dadurch definiert, dass der wenigstens eine Schwenksperrvorsprung gegen eine Nasenwand des Naseninnenraums der Tiernase drückt.

Der erfindungsgemäße Nasenring verfolgt somit ein vollkommen anderes Konzept als die aus dem Stand der Technik bekannten Nasenringe, bei denen dornartige Stacheln in das Euter des Milch gebenden Tieres stechen. Erfindungsgemäß erzeugt der gegen die Nasenwand des Naseninnenraums der Tiernase drückende Schwenksperrvorsprung ein unangenehmes oder sogar schmerzhaftes Gefühl bei dem von dem Saugen zu entwöhnenden Tier. Das Empfinden dieses Gefühls durch das Tier, beispielsweise das Kalb, hat zur Folge, dass es von sich aus mit dem Saugen an dem Euter des Milch gebenden Tieres aufhört. Schmerzen oder Verletzungen durch das Einstechen von Stacheln in das Euter des Milch gebenden Tieres werden somit bei Verwendung des erfindungsgemäßen Nasenrings ausgeschlossen. Die Milch gebende Tier wird in diesem Sinne vollständig verschont.

Das von dem Saugen zu entwöhnende Tier, beispielsweise ein Kalb, bildet gewissermaßen seinen eigenen Regelkreis ohne Beteiligung des Milch gebenden Tieres, beispielsweise einer Kuh:
Zum Saugen an dem Euter muss das Milch saugende Tier den an seiner Nase hängenden Nasenring zumindest bis in die Schwenksperrstellung nach oben schwenken. Dies führt zu einem unangenehmen Gefühl oder Schmerzen in der Tiernase, das bzw. die in dem Gehirn des Tieres dazu führen, dass es neuronale Signale aussendet, welche das Milch saugende Tier den Kopf senken lassen, um den erfindungsgemäßen Nasenring aus der Schwenksperrstellung zu bewegen, so dass der wenigstens eine Schwenksperrvorsprung nicht mehr gegen die Nasenwand des Naseninnenraums seiner Nase drückt. Das unangenehme Gefühl oder die Schmerzen in der Tiernase lassen dann nach.

Vorzugsweise erstreckt sich der wenigstens eine Schwenksperrvorsprung geradlinig in einer Erstreckungsrichtung von dem Ringkörper weg. Der Schwenksperrvorsprung ist beispielsweise stiftartig ausgebildet.

Die Erstreckungsrichtung des geradlinigen Schwenksperrvorsprungs ist vorzugsweise um einen Winkel im Bereich von 35° bis 70° relativ zu einer von dem Ringkörper aufgespannten Ringebene geneigt. Es hat sich herausgestellt, dass dieser Winkelbereich zumindest bei der Anatomie üblicher Kälbernasen die räumliche Ausrichtung der Schwenksperrstellung des Nasenrings derart definiert, dass das Ziel der Saugentwöhnung erreicht wird, ohne das Kalb durch ein Drücken des Schwenksperrvorsprungs gegen die Nasenwand bei Aktivitäten zu behindern, bei denen es sich nicht um Saugversuche handelt. Als besonders vorteilhaft hat sich in diesem Zusammenhang ein Winkel zwischen der Erstreckungsrichtung des geradlinigen Schwenksperrvorsprungs und der Ringebene im Bereich von 40° bis 60° erwiesen.

In vorteilhafter Weise sind in dem Naseninnenabschnitt des Ringkörpers wenigstens zwei Schwenksperrvorsprünge angeordnet. Dabei befindet sich auf jeder Seite des Spaltes wenigstens ein Schwenksperrvorsprung. Vorzugsweise sind die wenigstens zwei Schwenksperrvorsprünge symmetrisch zu dem Spalt an dem Ringkörper angeordnet.

Besonders vorteilhaft ist es, genau zwei Schwenksperrvorsprünge symmetrisch zu dem Spalt an dem Ringkörper anzuordnen, wobei die beiden Schwenksperrvorsprünge ihrer Geometrie nach identisch ausgebildet sind.

Der wenigstens eine oder die wenigstens zwei Schwenksperrvorsprünge sind vorzugsweise biegeelastisch ausgebildet und/oder mit einer weichen Oberfläche versehen. Dies verringert die Gefahr von Verletzungen an oder in der Tiernase. Der Grad der Biegeelastizität oder der Weichheit der Oberfläche wird so gewählt, dass das von dem Saugen zu entwöhnende Tier in der Schwenksperrstellung des Nasenrings wenigstens noch ein solches unangenehmes Gefühl in seiner Tiernase empfindet, dass es von dem Saugen ablässt.

In vorteilhafter Weise kann der gesamte Nasenring aus wenigstens einem elastischen Material hergestellt werden. Dabei kann der Grad der Elastizität derart gewählt werden, dass der zur Aufnahme der Nasenscheidewand vorgesehene Spalt durch Ziehen von Hand oder mit Hilfe eines zusätzlichen Werkzeugs aufgeweitet werden kann. Dies erleichtert das Anbringen bzw. Entfernen des Nasenrings an bzw. von der Tiernase.

### c) Ausführungsbeispiele

Ein Ausführungsbeispiel gemäß der vorliegenden Erfindung wird im Folgenden beispielhaft anhand der beigefügten Zeichnungen beschrieben. Es zeigen:
- Fig. 1:: Eine perspektivische Ansicht eines Ausführungsbeispiels eines erfindungsgemäßen Nasenrings;
- Fig. 2:: Eine Ansicht des in Fig. 1 gezeigten Nasenrings von vorne;
- Fig. 3:: Eine Ansicht des in Fig. 1 gezeigten Nasenrings von hinten;
- Fig. 4:: Eine Seitenansicht des in Fig. 3 gezeigten Nasenrings von links;
- Fig. 5:: Einen schematisch dargestellten Kopf eines Kalbes in Frontansicht mit einem an seiner Nase angebrachten Nasenring gemäß der Fig. 1 bis 4;
- Fig. 6:: Eine vergrößerte Seitenansicht des Nasenbereichs des in Fig. 5 gezeigten Kopfes von rechts, wobei sich der Nasenring in seiner Hängestellung befindet; und
- Fig. 7:: Eine vergrößerte Seitenansicht des Nasenbereichs des in Fig. 5 gezeigten Kopfes von rechts, wobei sich der Nasenring in seiner Schwenksperrstellung befindet.

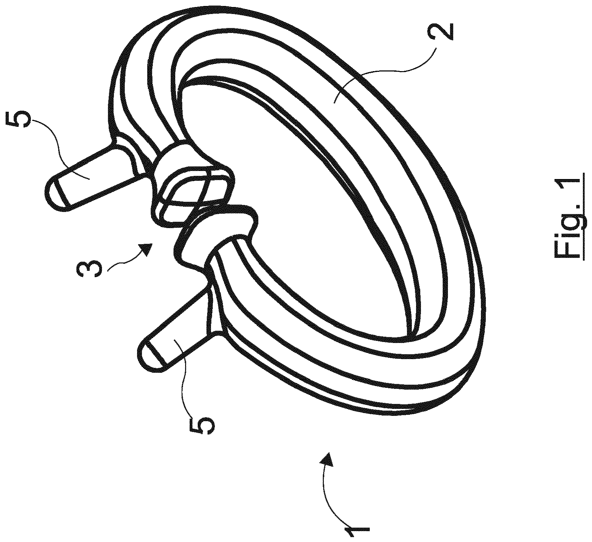

In Fig. 1 ist ein erfindungsgemäßer Nasenring 1 in perspektivischer Darstellung gezeigt. Er weist einen in etwa ellipsenförmigen Ringkörper 2 auf, der durch einen Spalt 3 unterbrochen ist. Bei dem gezeigten Ausführungsbeispiel ist auf jeder Seite des Spaltes 3 ein stiftartig geformter Schwenksperrvorsprung 5 vorgesehen, der sich geradlinig von dem Ringkörper 2 weg erstreckt. Der Spalt 3 dient der Aufnahme einer Nasenscheidewand eines Kalbes.

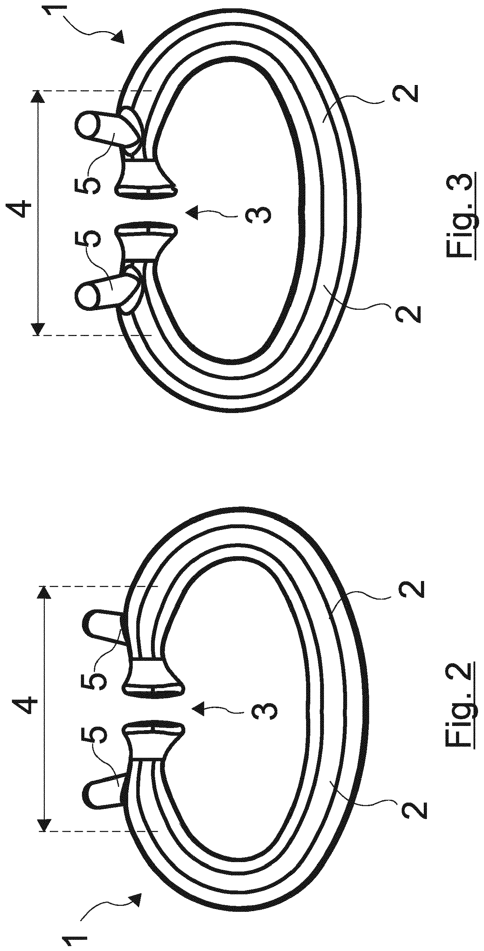

Wie in den Fig. 2 und 3 gezeigt ist, weist der Ringkörper 2 einen Naseninnenabschnitt 4 auf, der als ein Längenabschnitt des Ringkörpers 2 in einem Naseninnenraum 6 der Nase des Kalbes zu liegen kommt, wenn der Nasenring 1 durch Aufnahme der Nasenscheidewand in den Spalt 3 an der Nase des Kalbes angebracht wird (vgl. Fig. 5 bis 7). Die beiden stiftartigen Schwenksperrvorsprünge 5 sind innerhalb des Naseninnenabschnitts 4 angeordnet, so dass auch sie sich bei an der Nase des Kalbes angebrachtem Nasenring 1 in dem Naseninnenraum 6 befinden. Der Naseninnenabschnitt 4 umfasst nicht nur die die beiden Schwenksperrvorsprünge 5 tragenden Endabschnitte des Ringkörpers 2, sondern auch den Spalt 3. Bei erfindungsgemäßen Nasenringen 1, die für Kälber vorgesehen sind, weist der Naseninnenabschnitt 4 eine Länge von 4 bis 6 cm auf.

Fig. 4 zeigt eine Seitenansicht des in Fig. 3 dargestellten Nasenrings 1 von links. Der Ringkörper 2 spannt eine Ringebene RE auf, die senkrecht zu der Zeichenebene der Fig. 4 verläuft und den Ringkörper 2 in Fig. 4 mittig teilt. Die länglichen Schwenksperrvorsprünge 5, von denen in Fig. 4 nur einer zu sehen ist, weisen eine in die Zeichenebene der Fig. 4 projizierte (vgl. leichte Schrägstellung der Schwenksperrvorsprünge 5 voneinander weg in den Fig. 2 und 3) Erstreckungsrichtung ER auf. Der Winkel α zwischen der Ringebene RE und der projizierten Erstreckungsrichtung ER beträgt bei dem gezeigten Ausführungsbeispiel α = 45°. Es hat sich als vorteilhaft erwiesen, den Winkel α im Bereich von 35° bis 70° zu wählen, bevorzugt im Bereich von 40° bis 60°. Die vorgenannten Winkelangaben gelten auch dann, wenn die Erstreckungsrichtung ER exakt in der Zeichenebene der Fig. 4 liegt.

Der in die Zeichenebene der Fig. 4 projizierte Abstand A des in Fig. 4 rechts oben zu sehenden freien Endes 8 des Schwenksperrvorsprungs 5 von dem Schnittpunkt S, in welchem die in die Zeichenebene der Fig. 4 projizierte Erstreckungsrichtung ER die Ringebene ER schneidet, liegt bei für Kälber vorgesehenen Nasenringen 1 im Bereich von 1 bis 3 cm. Der Abstand A bildet somit den wirksamen Schwenkabstand der freien Enden 8 der beiden Schwenksperrvorsprünge 5 von einer gedachten Schwenkachse, die in Fig. 4 senkrecht zu der Zeichenebene durch den Schnittpunkt S verläuft.

Die Fig. 5 bis 7 zeigen die Anwendung und Wirkungsweise des erfindungsgemäßen Nasenrings 1 in Zusammenhang mit der Nase eines Kalbes. In Fig. 5 ist zu erkennen, wie der Nasenring 1 in der Nase des Kalbes hängt. Dabei befindet sich die Nasenscheidewand der Nase in dem Spalt 3 des Nasenrings 1.

In der vergrößerten Seitenansicht gemäß Fig. 6 ist zu erkennen, wie der Nasenring 1 in seiner Hängestellung schwerkraftbedingt nach unten hängt. In dieser Hängestellung befinden sich die beiden Schwenksperrvorsprünge 5 frei in dem Naseninnenraum 6, ohne eine den Naseninnenraum 6 begrenzende Nasenwand 7 zu berühren. Das Kalb spürt in der Hängestellung des Nasenrings 1 somit nicht, dass sich die Schwenksperrvorsprünge 5 in seinem Naseninnenraum 6 befinden.

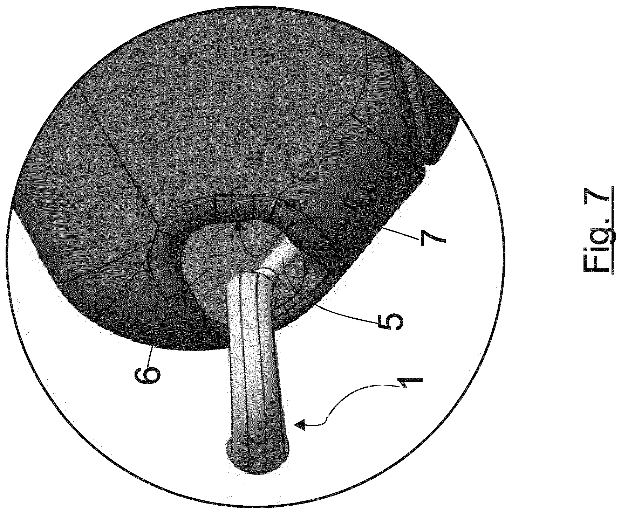

Versucht das Kalb, an dem Euter einer erwachsenen Kuh Milch zu saugen, so bewegt es den Nasenring 1 in Fig. 6 im Sinne einer Schwenkbewegung im Uhrzeigersinn. Der Nasenring 1 wird dadurch in die in Fig. 7 gezeigte Schwenksperrstellung bewegt, in welcher die beiden Schwenksperrvorsprünge 5 mit ihren freien stumpfen Enden gegen die Nasenwand 7 des Naseninnenraums 6 drücken. Diesen Kontakt der Schwenksperrvorsprünge 5 mit der Nasenwand 7 empfindet das Kalb als unangenehm, so dass es versuchen wird, die unangenehme Empfindung möglichst rasch abzustellen. Hierzu beendet es den Saugvorgang an dem Euter und bewegt seinen Kopf derart, dass sich der Nasenring 1 aus der in Fig. 7 gezeigten Schwenksperrstellung in Richtung der in Fig. 6 gezeigten Hängestellung bewegt. Dies führt dazu, dass die Schwenksperrvorsprünge 5 außer Kontakt mit der Nasenwand 6 kommen und sich das unangenehme Empfinden des Kalbes oder sogar ein Schmerzempfinden des Kalbes einstellen.

Die räumliche Ausrichtung der Schwenksperrstellung des Nasenrings 1 wird durch den Winkel a, den Abstand A der freien Enden 8 der Schwenksperrvorsprünge 5 von dem Schnittpunkt S sowie die individuelle Anatomie der Nase des Kalbes bestimmt. Die Schwenksperrstellung wird stets dann erreicht, wenn die Schwenksperrvorsprünge 5 in Anlage an die Nasenwand kommen. Sie blockieren oder sperren dann auf mechanischem Wege eine weitergehende Schwenkbewegung des Nasenrings nach oben in Richtung Nasenrücken.

### BEZUGSZEICHENLISTE

- 1: Nasenring
- 2: Ringkörper
- 3: Spalt des Ringkörpers 2
- 4: Naseninnenabschnitt 4 des Ringkörpers 2
- 5: Schwenksperrvorsprung
- 6: Naseninnenraum
- 7: Nasenwand
- 8: Freies Ende des Schwenksperrvorsprungs 5

- RE: Ringebene des Ringkörpers 2
- ER: Erstreckungsrichtung des Schwenksperrvorsprungs 5
- S: Schnittpunkt der in die Zeichenebene der Fig. 4 projizierten Erstreckungsrichtung ER mit der Ringebene RE

## Patentansprüche

1. Nasenring (1) zum Verhindern des Saugens Milch saugender Tiere an Eutern Milch gebender Tiere, umfassend einen Ringkörper (2) und einen den Ringkörper (2) unterbrechenden Spalt (3) zur Aufnahme einer Nasenscheidewand des Tieres, wobei der Ringkörper (2) im Bereich des Spaltes (3) einen Naseninnenabschnitt (4) aufweist, der in einem Naseninnenraum (6) einer Tiernase zu liegen kommt, wenn der Nasenring (1) an der Tiernase angebracht ist,
**dadurch gekennzeichnet, dass**
der Ringkörper (2) in dem Naseninnenabschnitt (4) wenigstens einen Schwenksperrvorsprung (5) aufweist, der von dem Ringkörper (2) absteht und eine Schwenksperrstellung des an der Tiernase befindlichen Nasenrings (1) definiert, wobei der Nasenring (1) in seiner Hängestellung schwerkraftbedingt nach unten hängt und sich der Schwenksperrvorsprung (5) frei in dem Naseninnenraum (6) befindet, ohne eine den Naseninnenraum (6) begrenzende Nasenwand (7) zu berühren, und wobei abhängig von einer nach oben gerichteten Schwenkbewegung in die Schwenksperrstellung der Schwenksperrvorsprung (5) gegen die Nasenwand (7) des Naseninnenraums (6) der Tiernase drückt.

2. Nasenring (1) nach Anspruch 1,
**dadurch gekennzeichnet, dass**
sich der Schwenksperrvorsprung (5) geradlinig in einer Erstreckungsrichtung (ER) erstreckt.

3. Nasenring (1) nach Anspruch 2,
**dadurch gekennzeichnet, dass**
der Ringkörper (2) eine Ringebene (RE) aufspannt und die Erstreckungsrichtung (ER) mit der Ringebene (RE) einen Winkel (α) im Bereich von 35° bis 70° bildet.

4. Nasenring (1) nach Anspruch 3,
**dadurch gekennzeichnet, dass**
der Winkel (a) im Bereich von 40° bis 60° liegt.

5. Nasenring (1) nach einem der vorangehenden Ansprüche,
**dadurch gekennzeichnet, dass**
wenigstens zwei Schwenksperrvorsprünge (5) in dem Naseninnenabschnitt (4) des Ringkörpers (2) vorhanden sind, wobei auf jeder Seite des Spaltes (3) wenigstens ein Schwenksperrvorsprung (5) angeordnet ist.

6. Nasenring (1) nach Anspruch 5,
**dadurch gekennzeichnet, dass**
die wenigstens zwei Schwenksperrvorsprünge (5) symmetrisch zu dem Spalt (3) angeordnet sind.

7. Nasenring (1) nach einem der vorangehenden Ansprüche,
**dadurch gekennzeichnet, dass**
der wenigstens eine Schwenksperrvorsprung (5) biegeelastisch ausgebildet ist.

8. Nasenring (1) nach einem der vorangehenden Ansprüche,
**dadurch gekennzeichnet, dass**
der wenigstens eine Schwenksperrvorsprung (5) eine weiche Oberfläche aufweist.

9. Nasenring (1) nach einem der vorangehenden Ansprüche,
**dadurch gekennzeichnet, dass**
der gesamte Nasenring (1) derart aus wenigstens einem elastischen Material hergestellt ist, dass der Spalt (3) zum Anbringen und Entfernen des Nasenrings (1) an der Tiernase von Hand aufweitbar ist.

10. Nasenring (1) nach einem der Ansprüche 1 bis 8,
**dadurch gekennzeichnet, dass**
der gesamte Nasenring (1) derart aus wenigstens einem elastischen Material hergestellt ist, dass der Spalt (3) zum Anbringen und Entfernen des Nasenrings (1) an der Tiernase mit Hilfe eines zusätzlichen Werkzeugs aufweitbar ist.

11. Verwendung eines Nasenrings (1) für Tiere, umfassend einen Ringkörper (2) und einen den Ringkörper (2) unterbrechenden Spalt (3) zur Aufnahme einer Nasenscheidewand des Tieres, wobei der Ringkörper (2) im Bereich des Spaltes (3) einen Naseninnenabschnitt (4) aufweist, der in einem Naseninnenraum (6) einer Tiernase zu liegen kommt, wenn der Nasenring (1) an der Tiernase angebracht ist, und wobei der Ringkörper (2) in dem Naseninnenabschnitt (4) wenigstens einen Schwenksperrvorsprung (5) aufweist, der von dem Ringkörper (2) absteht und eine Schwenksperrstellung des an der Tiernase befindlichen Nasenrings (1) definiert, zum Verhindern des Saugens Milch saugender Tiere an Eutern Milch gebender Tiere derart, dass der Schwenksperrvorsprung (5) in der Schwenksperrstellung gegen eine Nasenwand (7) des Naseninnenraums (6) der Tiernase drückt.

## Claims

1. Nose ring (1) for preventing the sucking of milk from the udders of milk-providing animals by milk-sucking animals, comprising a ring body (2) and a gap (3) interrupting the ring body (2) for receiving a nasal septum of the animal, the ring body (2) having, in the region of the gap (3), an inner nose portion (4) which comes to rest in an inner nose space (6) of the nose of an animal when the nose ring (1) is fitted to the nose of the animal,
**characterised in that**
the ring body (2) has, in the inner nose portion (4), at least one swivel-blocking projection (5) which projects from the ring body (2) and defines a swivel-blocking position of the nose ring (1) located on the nose of the animal, the nose ring (1), in its hanging position, hanging down due to gravity and the swivel-blocking projection (5) being freely located in the inner nose space (6) without touching a nose wall (7) delimiting the inner nose space (6), and wherein dependent on an upward swivelling movement into the swivel-blocking position, the swivel-blocking projection (5) presses against the nose wall (7) of the inner nose space (6) of the nose of the animal.

2. Nose ring (1) according to claim 1,
**characterised in that**
the swivel-blocking projection (5) extends in a straight line in an extension direction (ER).

3. Nose ring (1) according to claim 2,
**characterised in that**
the ring body (2) spans a ring plane (RE) and the extension direction (ER) forms an angle (a) in the range of from 35° to 70° with the ring plane (RE).

4. Nose ring (1) according to claim 3,
**characterised in that**
the angle (a) is in the range of from 40° to 60°.

5. Nose ring (1) according to any of the preceding claims,
**characterised in that**
there are at least two swivel-blocking projections (5) in the inner nose portion (4) of the ring body (2), at least one swivel-blocking projection (5) being arranged on each side of the gap (3).

6. Nose ring (1) according to claim 5,
**characterised in that**
the at least two swivel-blocking projections (5) are arranged symmetrically with respect to the gap (3).

7. Nose ring (1) according to any of the preceding claims,
**characterised in that**
the at least one swivel-blocking projection (5) is designed to be flexible.

8. Nose ring (1) according to any of the preceding claims,
**characterised in that**
the at least one swivel-blocking projection (5) has a soft surface.

9. Nose ring (1) according to any of the preceding claims,
**characterised in that**
the entire nose ring (1) is made of at least one elastic material such that the gap (3) for fitting the nose ring (1) to and removing it from the nose of the animal can be widened by hand.

10. Nose ring (1) according to any of claims 1 to 8,
**characterised in that**
the entire nose ring (1) is made of at least one elastic material such that the gap (3) for fitting the nose ring (1) to and removing it from the nose of the animal can be widened using an additional tool.

11. Use of a nose ring (1) for animals, comprising a ring body (2) and a gap (3) interrupting the ring body (2) for receiving a nasal septum of the animal, the ring body (2) having, in the region of the gap (3), an inner nose portion (4) which comes to rest in an inner nose space (6) of an nose of an animal when the nose ring (1) is fitted to the nose of the animal, and the ring body (2) having, in the inner nose portion (4), at least one swivel-blocking projection (5) which projects from the ring body (2) and defines a swivel-blocking position of the nose ring (1) located on the nose of the animal, for preventing the sucking of milk from the udders of milk-providing animals by milk-sucking animals such that the swivel-blocking projection (5), in the swivel-blocking position, presses against the nose wall (7) of the inner nose space (6) of the nose of the animal.

## Revendications

1. Anneau nasal (1) pour empêcher la tétée d'animaux tétant du lait au niveau de pis d'animaux laitiers, comprenant un corps annulaire (2) et une fente (3) interrompant le corps annulaire (2) pour la réception d'une cloison nasale de l'animal, dans lequel le corps annulaire (2) présente dans la zone de la fente (3) une section intérieure nasale (4), qui s'arrête dans un espace intérieur nasal (6) d'un nez d'animal, lorsque l'anneau nasal (1) est monté au niveau du nez d'animal,
**caractérisé en ce que**
le corps annulaire (2) dans la section intérieure nasale (4) présente au moins une saillie de verrouillage de pivotement (5), qui dépasse du corps annulaire (2) et définit une position de verrouillage de pivotement de l'anneau nasal (1) se trouvant au niveau du nez d'animal, dans lequel l'anneau nasal (1) pend dans sa position suspendue par gravité vers le bas et la saillie de verrouillage de pivotement (5) se trouve libre dans l'espace intérieur nasal (6), sans toucher une paroi nasale (7) délimitant l'espace intérieur nasal (6), et dans lequel en fonction d'un mouvement de pivotement dirigé vers le haut dans la position de verrouillage de pivotement, la saillie de verrouillage de pivotement (5) pousse contre la paroi nasale (7) de l'espace intérieur nasal (6) du nez d'animal.

2. Anneau nasal (1) selon la revendication 1,
**caractérisé en ce que**
la saillie de verrouillage de pivotement (5) s'étend de manière rectiligne dans une direction d'extension (ER).

3. Anneau nasal (1) selon la revendication 2,
**caractérisé en ce que**
le corps annulaire (2) couvre un plan annulaire (RE) et la direction d'extension (ER) forme avec le plan annulaire (RE) un angle (α) dans la plage de 35° à 70°.

4. Anneau nasal (1) selon la revendication 3,
**caractérisé en ce que**
l'angle (α) est dans la plage de 40° à 60°.

5. Anneau nasal (1) selon l'une quelconque des revendications précédentes,
**caractérisé en ce que**
au moins deux saillies de verrouillage de pivotement (5) sont présentes dans la section intérieure nasale (4) du corps annulaire (2), dans lequel au moins une saillie de verrouillage de pivotement (5) est agencée de chaque côté de la fente (3).

6. Anneau nasal (1) selon la revendication 5,
**caractérisé en ce que**
les au moins deux saillies de verrouillage de pivotement (5) sont agencées symétriquement par rapport à la fente (3).

7. Anneau nasal (1) selon l'une quelconque des revendications précédentes,
**caractérisé en ce que**
l'au moins une saillie de verrouillage de pivotement (5) est réalisée de manière élastique à la flexion.

8. Anneau nasal (1) selon l'une quelconque des revendications précédentes,
**caractérisé en ce que**
l'au moins une saillie de verrouillage de pivotement (5) présente une surface molle.

9. Anneau nasal (1) selon l'une quelconque des revendications précédentes,
**caractérisé en ce que**
l'ensemble de l'anneau nasal (1) est fabriqué à partir d'au moins un matériau élastique, de sorte que la fente (3) peut être élargie à la main pour l'application et le retrait de l'anneau nasal (1) au niveau du nez d'animal.

10. Anneau nasal (1) selon l'une quelconque des revendications 1 à 8,
**caractérisé en ce que**
l'ensemble de l'anneau nasal (1) est fabriqué à partir d'au moins un matériau élastique, de sorte que la fente (3) peut être élargie à l'aide d'un outil supplémentaire pour l'application et le retrait de l'anneau nasal (1) au niveau du nez d'animal.

11. Utilisation d'un anneau nasal (1) pour animaux, comprenant un corps annulaire (2) et une fente interrompant le corps annulaire (2) pour la réception d'une cloison nasale de l'animal, dans lequel le corps annulaire (2) présente dans la zone de la fente (3) une section intérieure nasale (4), qui s'arrête dans un espace intérieur nasal (6) d'un nez d'animal, lorsque l'anneau nasal (1) est monté au niveau du nez d'animal, et dans lequel le corps annulaire (2) dans la section intérieure nasale (4) présente au moins une saillie de verrouillage de pivotement (5), qui dépasse du corps annulaire (2) et définit une position de verrouillage de pivotement de l'anneau nasal (1) se trouvant au niveau du nez d'animal, pour empêcher la tétée d'animaux tétant du lait au niveau de pis d'animaux laitiers de sorte que la saillie de verrouillage de pivotement (5) dans la position de verrouillage de pivotement pousse contre une paroi nasale (7) de l'espace intérieur nasal (6) du nez d'animal.
